# EUROPEAN PATENT APPLICATION

(11) **EP 4 738 600 A1**
(43) Date of publication of application: **06.05.2026**
(21) Application number: 24853285.5
(22) Date of filing: 20.05.2024
(51) Int. Cl.: H01M 50/531, H01M 50/536

(54) **BATTERY CELL, ASSEMBLY METHOD FOR BATTERY CELL, AND BATTERY PACK**

(30) Priority: 11.08.2023 CN 202311010207
(71) Applicant: Sunwoda Mobility Energy Technology Co., Ltd., Shenzhen, Guangdong 518107 (CN)
(72) Inventor: YANG, Wei, Shenzhen, Guangdong 518107 (CN); ZHANG, Meng, Shenzhen, Guangdong 518107 (CN)
(74) Representative: Elzaburu S.L.P.
(86) International application number: PCT/CN2024/094190
(87) International publication number: WO 2025/035870

(57) **Abstract**

A battery cell (1), a method for assembling the battery cell (1), and a battery pack are provided. In the battery cell (1), a tab (22) in an electrode assembly (20) extends in a first direction (X) without bending. A connecting sheet (31) is provided on an end surface (2221) of a second end (222) of a tab (22) exposed from a main body (21), and the connecting sheet (31) is welded to the end surface (2221) of the second end (222) to form a welding mark (32) extending in a second direction (Y). The tab (22) only needs to be exposed from the main body (21) by a short distance to achieve connection with the connecting sheet (31), thereby increasing the capacity of the battery cell (1) and enhancing the energy density of the battery cell (1).

## Description

The present application claims priority to Chinese patent application No. 202311010207.2 filed with China National Intellectual Property Administration on August 11, 2023, and entitled "Battery Cell, Method for Assembling Battery Cell, and Battery Pack", which is hereby incorporated by reference in its entirety.

### TECHNICAL FIELD

The present application relates to the technical field of batteries, in particular to a battery cell, a method for assembling the battery cell, and a battery pack.

### BACKGROUND

In existing battery cells, tabs of a cell generally protrude from a main body of the cell along a third direction of the cell. To connect with adapter sheets, the tabs extending along the third direction needs to be bent, and the bent tabs are connected to the adapter sheets. This will increase the bending process, affecting the assembly efficiency of the battery cell.

### TECHNICAL SOLUTION

In a first aspect, the present application provides a battery cell, including: a housing having an accommodating cavity; where the battery cell further includes: an electrode assembly, provided in the accommodating cavity and including a main body and a tab connected to the main body, where the main body has a first direction, and the tab extends only along the first direction, the tab includes a second end, and the second end is located on a side of the tab away from the main body; a connecting assembly, provided on a side of the second end away from the main body and fixed to an end surface of the second end by welding, where a welding mark is formed at a welding position between the connecting assembly and the end surface of the second end, at least part of the welding mark penetrates the connecting assembly and partially extends along the first direction into the second end of the tab, the tab includes a plurality of tab sheets stacked along the second direction, and the welding mark is arranged along the second direction, where the first direction intersects with the second direction; the housing is provided with an opening, and a side of the main body facing the opening has a mounting surface perpendicular to the first direction; in the first direction, a distance between the end surface of the second end of the tab and the mounting surface is L, where 0.1 mm ≤ L ≤ 10 mm.

Optionally, 0.5 mm ≤ L ≤ 5 mm.

Optionally, the housing is provided with the opening, and the side of the main body facing the opening has the mounting surface perpendicular to the first direction; a orthographic projection of the welding mark onto the mounting surface has two maximum contour points opposite to each other in the second direction, and a line segment extending along the second direction is provided between the two maximum contour points; a length L₁ (mm) of the line segment is a maximum dimension of the orthographic projection of the welding mark onto the mounting surface in the second direction; the housing includes two side walls opposite to each other along the second direction, and a distance between the two side walls in the second direction is L₂ (mm), satisfying: 0.5 ≤ L₁/L₂ < 1.

Optionally, 0.6 ≤ L₁/L₂ ≤ 0.95.

Optionally, the connecting assembly includes a connecting sheet and a terminal; the connecting sheet includes a first segment and a second segment connected along a third direction, and the first segment is fixed to the end surface of the second end by welding; the terminal is provided on a surface of the second segment away from the main body in the first direction, and the terminal is electrically connected to the tab through the connecting sheet; the first direction, the second direction, and the third direction are perpendicular to each other.

Optionally, the welding mark is formed at a welding position between the connecting sheet and the end surface of the second end, and at least part of the welding mark penetrates the connecting sheet along the first direction, and partially extends into the second end of the tab; in the first direction, the connecting sheet has a thickness of H₁ mm, and the welding mark has a depth of H₂ mm, satisfying: 0.5 mm + H₁ ≤ H₂ ≤ 1.5 mm + H₁.

Optionally, the housing has the opening connecting the accommodating cavity to the outside; the battery cell further includes a top cover plate and a baffle plate, and the top cover plate covers the opening of the housing; the top cover plate is provided with a first through-hole and a second through-hole arranged spaced apart along the third direction, and the terminal is inserted into the first through-hole; the second through-hole is provided opposite to the second end of the tab along the first direction, and the baffle plate is provided within the second through-hole, where the first direction, the second direction, and the third direction are perpendicular to each other.

Optionally, the battery cell further includes an insulating sheet provided between the baffle plate and the first segment to electrically insulate the connecting sheet from the baffle plate.

Optionally, a shape of the welding mark includes at least one of a circle, an arc, an oblique line, and a polyline.

Optionally, the welding mark has a shape of an oblique line, each connecting sheet is provided with a plurality of welding mark units, and the plurality of welding mark units form the welding mark; and an angle is formed between a length direction of each welding mark unit and the second direction, and the angle is within a range of 10°-80°.

Optionally, a preset angle α is formed between the line segment and the third direction, and the preset angle α satisfies: 0° < α ≤ 90°.

Optionally, the preset angle α satisfies: 85° ≤ α ≤ 90°.

In a second aspect, the present application provides a method for assembling the battery cell, including the following steps: inserting the electrode assembly into the housing, where the second end of the tab of the electrode assembly in the first direction faces the opening of the housing; welding at least part of the end surface of the second end of the tab with the connecting sheet to form the welding mark, where the welding mark extends along the second direction.

In a third aspect, the present application provides a battery pack, the battery pack includes the battery cell as described in the first aspect, or the battery pack includes the battery cell assembled by the method for assembling the battery cell in the second aspect.

### BRIEF DESCRIPTION OF DRAWINGS

FIG. 1 is a schematic structural diagram of a battery cell provided in an embodiment of the present application.
FIG. 2 is an exploded view of FIG. 1.
FIG. 3 is a sectional view along A-A direction of FIG. 1.
FIG. 4 is a schematic enlarged view of position B in FIG. 3.
FIG. 5 is a schematic diagram of a first structure of an electrode assembly in a battery cell provided in an embodiment of the present application.
FIG. 6 is a schematic enlarged view of position C in FIG. 5.
FIG. 7 is a schematic diagram of an assembled structure of a positive tab, a negative tab, a positive electrode sheet, a negative electrode sheet, and a separator in an electrode assembly of a battery cell provided in an embodiment of the present application.
FIG. 8 is a schematic diagram of an assembled structure of a connecting sheet and an electrode assembly in an implementation of a battery cell provided in an embodiment of the present application.
FIG. 9 is a top view of FIG. 8.
FIG. 10 is a sectional view along D-D direction of FIG. 8.
FIG. 11 is a schematic enlarged view of position E in FIG. 10.
FIGS. 12A-12E are schematic structural diagrams of weld marks in battery cells provided in other implementations of embodiments of the present application.
FIG. 13 is a schematic diagram of a second structure of an electrode assembly in a battery cell provided in an embodiment of the present application.

### Reference numerals:

1. Battery cell;
10. Housing;
101. Accommodating cavity;
11. Opening;
20. Electrode assembly;
21. Main body;
210. Mounting surface;
21a. Negative electrode sheet;
21b. Positive electrode sheet;
21c. Separator;
22. Tab;
22a. Negative tab;
22b. Positive tab;
221. First end;
222. Second end;
2221. End surface;
220. Tab sheet;
30. Connecting assembly;
31. Connecting sheet;
311. First segment;
312. Second segment;
32. Welding mark;
320. Line segment;
3201. Maximum contour line;
321. Welding mark unit;
33. Terminal;
40. Top cover plate;
401. First through-hole;
402. Second through-hole;
41. Baffle plate;
411. Insulating sheet;
42. Explosion-proof valve;
43. Liquid injection hole;
44. Lower plastic member;
X. First direction;
Y. Second direction;
Z. Third direction.

### DETAILED DESCRIPTION

The technical solutions in the embodiments of the present application will be clearly and completely described hereinafter in combination with the accompanying drawings in the embodiments of the present application. It is obvious that the embodiments described are merely a part, rather than all, of the embodiments of the present application. Based on the embodiments in the present application, all other embodiments obtained by those skilled in the art without creative labor shall fall within the protection scope of the present application. In addition, it should be understood that the specific implementations described herein are only used for illustrating and explaining the present application, and are not intended to limit the present application.

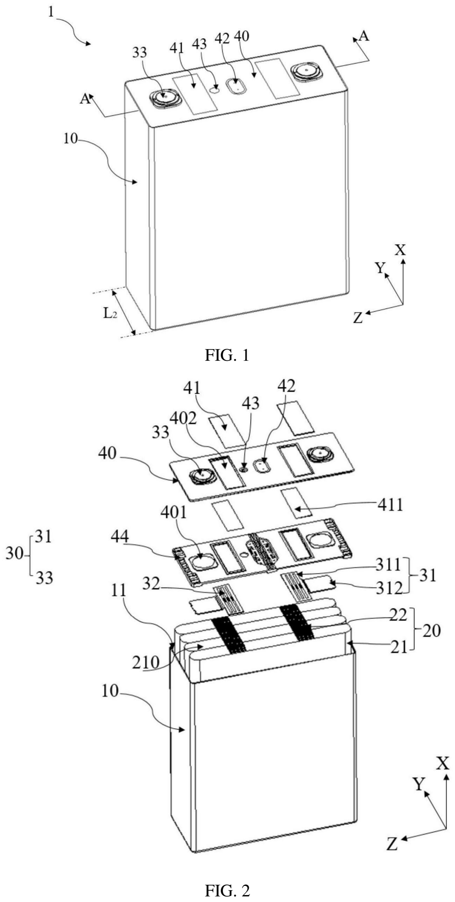

In some embodiments of the present application, referring to FIGS. 1-13, a battery cell 1 is provided. The battery cell 1 includes: a housing 10, an electrode assembly 20, and a connecting assembly 30.

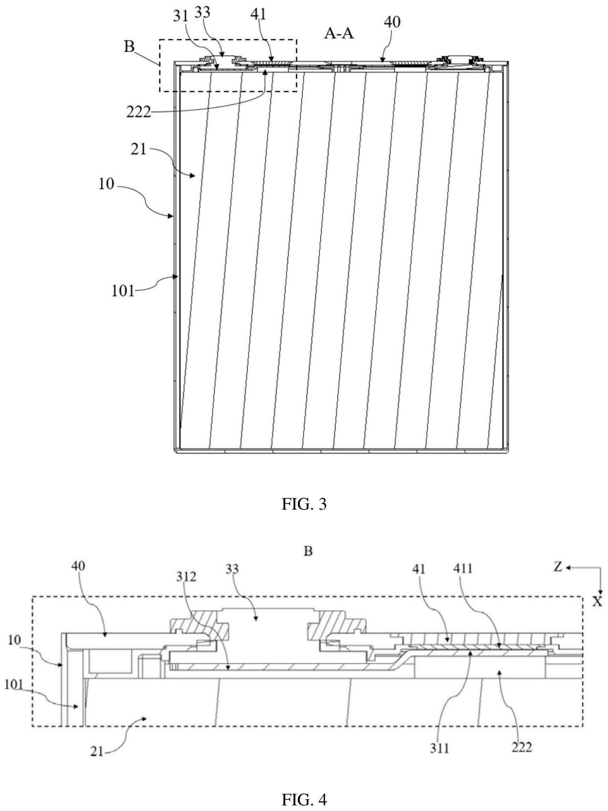

Referring to FIG. 1 and FIG. 2, the housing 10 is provided with an opening 11. Referring to FIGS. 3-4, the housing 10 has an accommodating cavity 101, the opening 11 is in communication with the accommodating cavity 101, and the opening 11 connects the accommodating cavity 101 to the outside. The housing 10 is a hexahedral structure. In the embodiments shown in FIG. 1 and FIG. 2, the opening 11 is formed in a top surface of the housing 10 in its height direction.

Referring to FIG. 2 and FIG. 3, the electrode assembly 20 is provided in the accommodating cavity 101. Referring to FIGS. 2-8 and FIG. 13, the electrode assembly 20 includes a main body 21 and a tab 22 connected to the main body 21. The main body 21 has a first direction X, and the tab 22 extends only along the first direction X. In the embodiments shown in FIGS. 2-8 and FIG. 13, the first direction X is a height direction of the housing 10. In other embodiments of the present application, the first direction X may also be a width direction or a height direction of the housing 10, depending on the position of the tab 22. For example, tabs may be provided at the same side or opposite sides. The tab 22 has a first end 221 and a second end 222 opposite to each other along the first direction X. The first end 221 of the tab 22 is connected to the main body 21, and the second end 222 of the tab 22 is located on a side away from the main body 21. A surface of the main body 21 facing the opening 11 is a mounting surface 210 perpendicular to the first direction X. That is, the second end 222 is exposed from the mounting surface 210 of the main body 21 and faces the opening 11 of the housing 10.

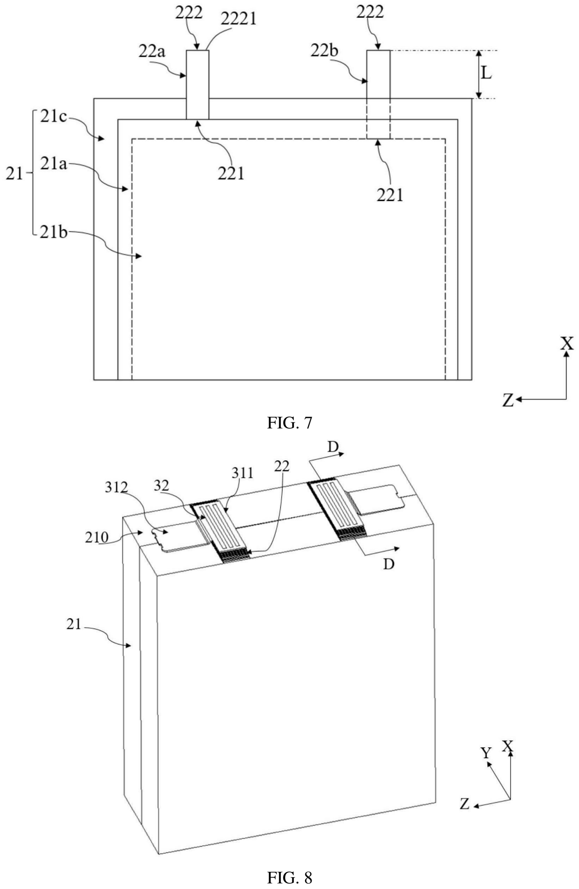

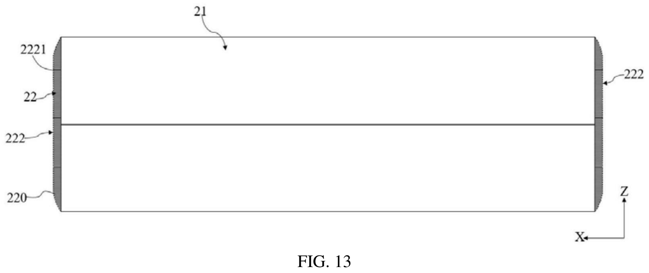

Referring to FIG. 7 and FIG. 13, the main body 21 includes electrode sheets and a separator. Specifically, the main body 21 includes a negative electrode sheet 21a, a positive electrode sheet 21b, and a separator 21c. The separator 21c is provided between the negative electrode sheet 21a and the positive electrode sheet 21b to provide insulation between the negative electrode sheet 21a and the positive electrode sheet 21b. The tab 22 includes a negative tab 22a and a positive tab 22b, where the negative tab 22a is connected to the negative electrode sheet 21a and the positive tab 22b is connected to the positive electrode sheet 21b. The tab 22 includes the first end 221 and the second end 222 opposite to each other along the first direction X. The first end 221 is located inside the main body 21 and connected to the electrode sheet, and the second end 222 is exposed from the surface of the main body 21 facing the opening 11. The tab 22 extends along the first direction X.

Referring to FIGS. 2-4, FIGS. 8-11, and FIGS. 12A-12E, the connecting assembly 30 is provided on a side of the second end 222 of the tab 22 away from the main body 21. The connecting assembly 30 is welded and fixed to an end surface 2221 of the second end 222. Specifically, in the embodiments shown in FIGS. 2-4, FIGS. 8-11, and FIGS. 12A-12E, the connecting assembly 30 includes a connecting sheet 31, and the connecting sheet 31 is provided on the end surface 2221 of the second end 222 of the tab 22. At least part of the end surface 2221 of the second end 222 is welded to the connecting sheet 31, forming a welding mark 32 at a welding position between the connecting sheet 31 and the end surface 2221 of the second end 222. The welding mark 32 extends along a second direction Y, which intersects with the first direction X. Specifically, in the embodiments shown in FIGS. 2-4, FIGS. 8-11, and FIGS. 12A-12E, the first direction X is orthogonal to the second direction Y. The tab 22 extends along the first direction X, and the end surface 2221 of the second end 222 of the tab 22 is a surface of the second end 222 away from the first end 221 in the first direction X.

The welding mark 32 extends along the second direction Y, which refers to that the welding mark 32 extends along the second direction Y in a form of a straight line, a curve, or a polyline, which can be specifically selected according to actual application situations.

Additionally, the electrode sheet and the tab 22 are integrally formed. Specifically, a portion of the electrode sheet where the surface thereof is coated with an active material layer constitutes the electrode sheet, while a portion of the electrode sheet with no active material layer is cut to form the tab 22. The second end 222 of the tab 22 is electrically connected to the connecting assembly 30 to supply power to external electric devices. In existing battery cells, a portion of the tab exposed from the main body has a relatively large length, causing the portion of the tab exposed from the main body to occupy excessive space inside the housing in the first direction X, thereby reducing the volume occupied by the main body within the accommodating cavity 101 of the housing. Although the tab is bent and connected to the connecting sheet to reduce space occupation, the bent tab still occupies a certain space, and an additional tab-bending process is introduced, increasing manufacturing costs.

In the battery cell provided in the embodiments of the present application, the connecting sheet 31 is connected to the end surface 2221 of the second end 222 of the tab 22 by welding, forming the welding mark 32 at the welding position. The portion of the tab 22 exposed from the mounting surface 210 of the main body 21 can be connected to the connecting sheet 31 without bending. Moreover, the tab 22 only needs to be exposed from the mounting surface 210 of the main body 21 by a short distance in order to connect with the connecting sheet 31, reducing the height of the tab 22 in the third direction Z. This decreases the space occupied by the tab 22 within the accommodating cavity 101 in the first direction X, and the saved space can be used for increasing the volume of the main body 21 of the electrode assembly 20, thereby enhancing the capacity of the battery cell 1.

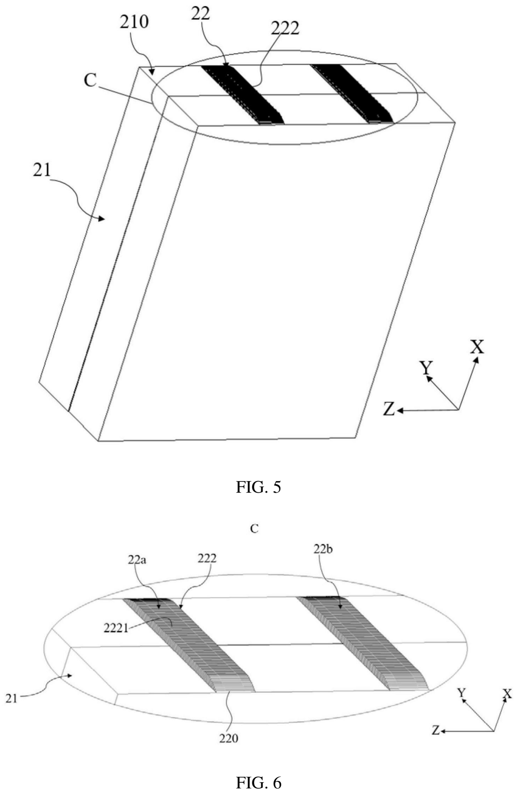

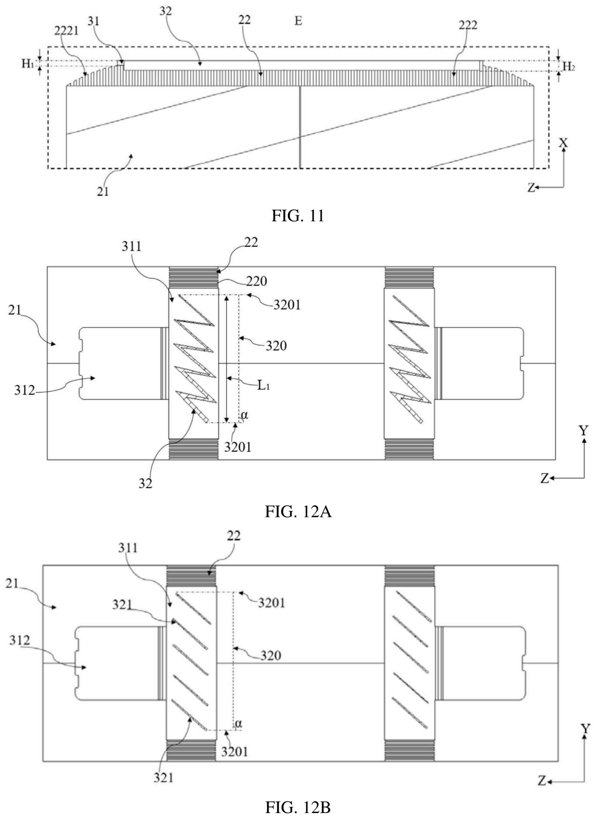

In some embodiments of the present application, referring to FIGS. 5-6 and FIGS. 8-13, the tab 22 includes a plurality of tab sheets 220 stacked along the second direction Y, and the welding mark 32 extends along the second direction Y. That is, the extension direction of the welding mark 32 is consistent with the stacking direction of the plurality of tab sheets 220. Thus, when the connecting sheet 31 is welded to the tab 22, as shown in FIG. 11, the molten connecting sheet 31 is perpendicular to the tab sheets 220, forming a T-shaped structure, thereby ensuring the stability of the connection between the connecting sheet 31 and the tab sheets 220. Additionally, since there are gaps between every two adjacent tab sheets 220 in the second direction Y, and the gaps extend along the third direction Z, the molten connecting sheet 31 formed during welding may fall into the gaps between every two adjacent tab sheets 220 if the welding mark 32 is arranged along the third direction Z. This leads to a risk of faulty welding between the connecting sheet 31 and the tab 22, affecting the connection stability between the connecting sheet 31 and the tab 22.

In some embodiments of the present application, referring to FIG. 5, FIG. 6, FIG. 11, and FIG. 13, the end surface 2221 of the second end 222 of the tab 22 has a length S in the second direction Y. The heights of the plurality of tab sheets 220 forming the tab 22 vary in the first direction X. Specifically, the heights of the tab sheets 220 corresponding to two ends of the length S of the tab 22 are lower than those of the tab sheets 220 corresponding to a middle segment of the length S of the tab 22, and the heights of the tab sheets 220 corresponding to the middle segment of the length S of the tab 22 are equal, forming an isosceles trapezoidal structure at the second end 222 of the tab 22. The connecting sheet 31 is welded to the tab 22 at the middle segment of the length S of the tab 22, forming the welding mark 32.

In some embodiments of the present application, referring to FIGS. 8-9 and FIGS. 12A-12E, the main body 21 has the mounting surface 210 perpendicular to the first direction X. An orthographic projection of the welding mark 32 onto the mounting surface 210 has two maximum contour points (not shown in the drawings) opposite to each other in the second direction Y. There is a line segment 320 extending along the second direction Y between the two maximum contour points, and a length L₁ (mm) of the line segment 320 is a maximum dimension of the orthographic projection of the welding mark 32 onto the mounting surface 210 in the second direction Y. Moreover, referring to FIG. 1, the housing 10 includes two side walls opposite to each other along the second direction Y, with a distance L₂ (mm) between the two side walls in the second direction Y, satisfying: 0.5 ≤ L₁/L₂ < 1. Specifically, the ratio of the L₁ to the L₂ may be 0.5, 0.55, 0.6, 0.65, 0.7, 0.75, 0.8, 0.85, 0.9, 0.95, 0.96, 0.97, 0.98, 0.99, or in a range between any two of these values. Among them, the L₂ is a distance between inner surfaces of the two side walls of the housing 10 opposite to each other in the second direction Y. The larger the ratio of the L₁ to the L₂, the greater the maximum dimension L₁ of the welding mark 32 in the second direction Y. Since the main body 21 of the electrode assembly 20 has a width S (not shown in the drawings) between its opposite side walls in the second direction Y, the maximum dimension L₁ of the welding mark 32 in the second direction Y is smaller than S. When 0.5 ≤ L₁/L₂ < 1 is satisfied, the battery cell has a high actual capacity/rated capacity. In other words, the energy corresponding to the tab can be fully utilized. Moreover, when 0.5 ≤ L₁/L₂ < 1 is satisfied, the welding yield of the battery cell is high. Additionally, when the ratio of the L₁ to the L₂ is less than 0.5, the actual capacity/rated capacity of the battery cell is too small, resulting in low actual capacity of the battery cell, which fails to meet the capacity requirements. When the ratio of the L₁ to the L₂ is greater than or equal to 1, laser welding becomes more difficult, increasing the risk of welding onto the aluminum housing on the two sides, thereby reducing the welding yield of the battery cell. Additionally, the larger L₁, the larger S, meaning that the main body 21 occupies more inner space of the accommodating cavity 101 in the second direction Y, resulting in a greater capacity of the electrode assembly. Therefore, when the ratio of the L₁ to the L₂ falls within the aforementioned range, it ensures the capacity of the electrode assembly 20 and prevents the width S of the main body 21 from becoming excessively large, which could cause the main body 21 to abut against the opposite side walls of the housing 10 in the second direction Y. This preserves an expansion space for the main body 21 in the second direction Y, avoiding the situation where the expansion of the electrode assembly 20 is limited during the cyclic use of the battery cell 1 to affect the service life and capacity of the battery cell. When the ratio of L₁ to L₂ is less than 0.5, the volume of the electrode assembly 20 is too small, resulting in lower capacity of the battery cell 1. When the ratio of L₁ to L₂ is greater than or equal to 1, the expansion space of the main body 21 may be affected, and thus the service life of the battery cell 1 is affected.

A method for determining the line segment 320 is as follows: taking the contour line of the orthographic projection of the welding mark 32 onto a plane where the mounting surface 210 is located as a reference; drawing a circumscribed rectangle with the contour line of the orthographic projection inscribed within the rectangle, where in the second direction Y, the circumscribed rectangle has two opposite sides extending along the second direction Y; extending the two sides along the third direction Z to form two maximum contour lines 3201 respectively; drawing a line segment between the two maximum contour lines 3201 to extend along the second direction Y; and determining the line segment connecting the two maximum contour lines 3201 as the line segment 320.

In some embodiments of the present application, 0.6 ≤ L₁/L₂ ≤ 0.95.

In some embodiments of the present application, the values of L₁ and L₂ can be determined by taking an average of multiple measurement results obtained using a measuring instrument such as a laser rangefinder or a vernier caliper.

In some embodiments of the present application, a preset angle is formed between the line segment 320 and the third direction Z, where the preset angle α satisfies: 0° < α ≤ 90°. When the angle α satisfies 0° < α ≤ 90°, it ensures the connection strength between the tab and the connecting sheet 31, while it ensures the energy on the electrode sheet of the wound core to be transmitted through the tab, ensuring that the actual capacity/rated capacity of the battery cell meets requirements.

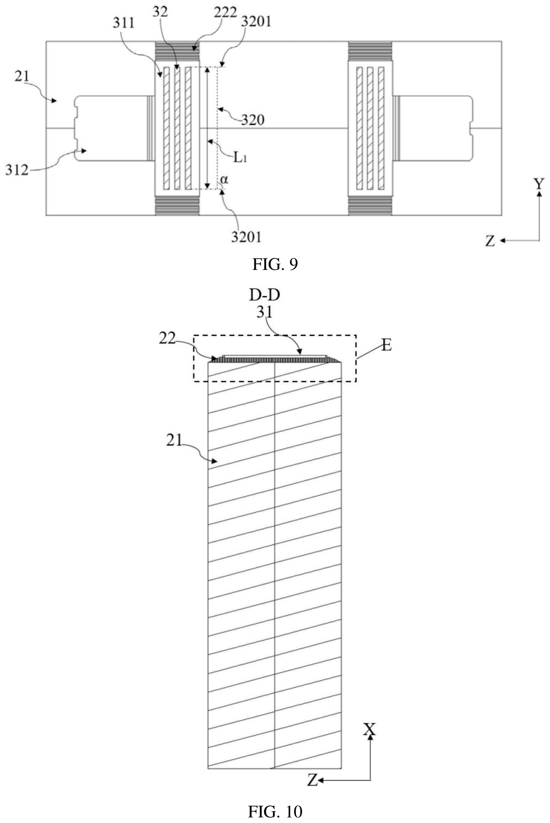

In some embodiments of the present application, referring to FIG. 9 and FIGS. 12A-12E, the preset angle α is formed between the line segment 320 and the third direction Z, where the preset angle α satisfies: 85° ≤ α ≤ 90°. When the angle α falls within this range, the connection strength between the tab and the connecting sheet 31 is improved, while the ratio of actual capacity to rated capacity of the battery cell increases, resulting in higher capacity of the battery cell.

In some embodiments of the present application, referring to FIG. 8 and FIG. 9, the welding mark 32 has a rectangular shape, and each connecting sheet 31 is provided with three welding marks 32 arranged spaced apart along the third direction Z. The two maximum contour points are respectively located at opposite ends of the welding mark 32 in the second direction Y.

In some embodiments of the present application, referring to FIG. 12A, the welding mark 32 has a wavy polyline shape, and each connecting sheet 31 is provided with one welding mark 32. The two maximum contour points are respectively located at opposite ends of the welding mark 32 in the second direction Y.

In some embodiments of the present application, referring to FIG. 12B, the welding mark 32 has an oblique line shape, and each connecting sheet 31 is provided with a plurality of welding mark units 321. The plurality of welding mark units 321 form the welding mark 32. An angle is formed between a length direction of each welding mark unit 321 and the second direction Y, and the angle ranges from 10°-80°. The two maximum contour points of each welding mark unit 321 are respectively located at opposite ends of the welding mark unit 321 in the second direction Y. The plurality of welding mark units 321 are arranged spaced apart along the second direction Y. Each welding mark unit 321 has a maximum dimension in the second direction Y, and the sum of the maximum dimensions of the plurality of welding mark units 321 on the same connecting sheet 31 is the maximum dimension L₁ of the welding mark 32 on that connecting sheet 31.

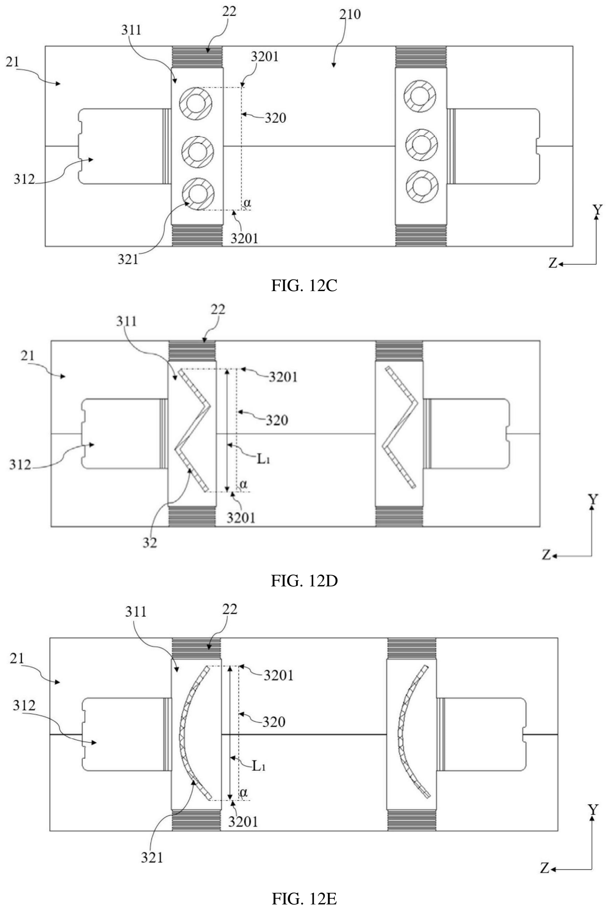

In some embodiments of the present application, referring to FIG. 12C, the welding mark 32 has a circle shape, and each connecting sheet 31 is provided with a plurality of welding mark units 321. The plurality of welding mark units 321 form the welding mark 32. The two maximum contour points of each welding mark unit 321 are respectively located at two opposite tangent points of the welding mark unit 321 in the second direction Y. The plurality of welding mark units 321 are arranged spaced apart along the second direction Y, and each welding mark unit 321 has a maximum dimension in the second direction Y. The sum of the maximum dimensions of the plurality of welding mark units 321 on the same connecting sheet 31 is the maximum dimension L₁ of the welding mark 32 on that connecting sheet 31.

In some embodiments of the present application, referring to FIG. 12D, the welding mark 32 has a three-segment polyline shape, and each connecting sheet 31 is provided with one welding mark 32. The two maximum contour points are respectively located at opposite ends of the three-segment polyline welding mark 32 in the second direction Y.

In some embodiments of the present application, referring to FIG. 12E, the welding mark 32 is arc-shaped, and each connecting sheet 31 is provided with one welding mark 32. The two maximum contour points are respectively located at opposite ends of the arc-shaped welding mark 32 in the second direction Y.

In some embodiments of the present application, at least portion of the welding mark 32 penetrates the connecting sheet 31 along the first direction X, and extends to the second end 222 of the tab 22. During the welding process, a portion of the connecting sheet 31 is fused to make the connecting sheet 31is penetrated and a portion of the tab 22 fused, allowing the tab 22 and the connecting sheet 31 to be fixedly connected, and thus ensuring connection stability between the tab 22 and the connecting sheet 31.

In some embodiments of the present application, in the first direction X, a thickness H₁ (mm) of the connecting sheet 31 and a depth H₂ (mm) of the welding mark 32 satisfy: 0.5 mm + H₁ ≤ H₂ ≤ 1.5 mm + H₁. Specifically, the value of the H₂ may be 0.5 mm + H₁, 0.6 mm + H₁, 0.7 mm + H₁, 0.8 mm + H₁, 0.9 mm + H₁, 1.0 mm + H₁, 1.1 mm + H₁, 1.2 mm + H₁, 1.3 mm + H₁, 1.4 mm + H₁, 1.5 mm + H₁, or in a range composed of any two of these values. The depth H₂ of the welding mark 32 is the sum of the thickness H₁ of the connecting sheet 31 and an extension depth of the welding mark 32 within the tab 22. Since the thickness H₁ of the connecting sheet 31 remains constant in each battery cell 1, the depth of the welding mark 32 depends on the fusion depth of the welding mark 32 in the second end 222 of the tab 22. When the depth of the welding mark 32 falls within the aforementioned range, it ensures the connection stability between the connecting sheet 31 and the tab 22 and prevents the welding mark 32 from becoming so deep that the main body 21 of the electrode assembly 20 is damaged. When the value of H₂ is less than 0.5 mm + H₁, the depth of the welding mark 32 is too small, resulting in insufficient stability between the tab 22 and the connecting sheet 31, so that during the cyclic use of the battery cell 1, there is a risk of loosening between the tab 22 and the connecting sheet 31, which may affect the normal use of the battery cell 1. When the value of H₂ is greater than 1.5 mm + H₁, the depth of welding mark 32 is too large, causing excessive fusion of the tab 22 during welding, resulting in that an overly short length of the unfused tab 22 is exposed from the mounting surface 210 of the main body 21 in the first direction X, affecting the connection stability between the tab 22 and the connecting sheet 31, and potentially affecting the power output stability of the electrode assembly 20.

In some embodiments of the present application, a method for measuring the depth H₂ of the welding mark 32 is as follows: selecting five measurement points on a cross-section containing a track of the welding mark 32, observing each measurement point with a microscope under an appropriate magnification, and calculating an average value, to obtain the depth H₂ of the track of the welding mark 32.

In some embodiments of the present application, the depth H₂ of the welding mark 32 is measured using a welding fusion depth microscope system (GRM-600) and a two-dimensional image measurement system (GM-2000M) produced by Shanghai Guangmi Instrument Co., Ltd.

In some embodiments of the present application, referring to FIG. 7, in the first direction X, the distance between the end surface 2221 of the second end 222 of the tab 22 and the mounting surface 210 is L. That is, the length of the tab 22 exposed from the surface of the main body 21 facing the opening 11 is L. In other words, the length of the tab 22 exposed from the mounting surface 210 of the main body 21 is L, where 0.1 mm ≤ L ≤ 10 mm. Specifically, the value of the L may be 0.1 mm, 0.5 mm, 1 mm, 2 mm, 3 mm, 4 mm, 5 mm, 6 mm, 7 mm, 8 mm, 9 mm, 10 mm, or in a range composed of any two of these values. When the value of the L falls within the above range, the connection stability and strength between the tab 22 and the connecting sheet 31 can be ensured, and no excessive space in the accommodating cavity 101 in the first direction X will be occupied, thereby improving space utilization within the accommodating cavity 101. When the value of the L is less than 0.1 mm, the length of the tab 22 exposed from the mounting surface 210 of the main body 21 is too small, and the depth of the welding mark 32 formed by welding is too small, affecting the connection stability between the connecting sheet 31 and the tab 22. When the value of the L is greater than 10 mm, the tab 22 occupies excessive space in the first direction X, resulting in a lower space occupancy rate of the main body 21 within the accommodating cavity 101, thereby affecting the capacity of the battery cell 1.

In some embodiments of the present application, 0.5 mm ≤ L ≤ 5 mm.

In some embodiments of the present application, a method for measuring the L is as follows: selecting a plurality of points at an intersection of the tab 22 and the mounting surface 210, measuring a perpendicular distance between each point and the end surface 2221 in the first direction X using a laser rangefinder or a micrometer, and calculating an average as the value of the L.

In some embodiments of the present application, referring to FIGS. 1-4, the connecting assembly 30 further includes a terminal 33. Referring to FIGS. 2-4, FIGS. 8-11, and FIGS. 12A-12E, the connecting sheet 31 includes a first segment 311 and a second segment 312 that are connected in sequence along the third direction Z. The first segment 311 is provided on the end surface 2221 of the second end 222, and the first segment 311 is welded to the end surface 2221 of the second end 222 to form the welding mark 32. That is, the welding mark 32 is formed on a surface of the first segment 311 away from the main body 21 along the first direction X. The terminal 33 is provided on a surface of the second segment 312 away from the main body 21 along the first direction X. The terminal 33 is electrically connected to the tab 22 through the connecting sheet 31. The second segment 312 of the connecting sheet 31 is provided on the mounting surface 210 of the main body 21, increasing a contact area between the connecting sheet 31 and the mounting surface 210, thereby ensuring the stability of the connecting sheet 31.

In some embodiments of the present application, the terminal 33 and the connecting sheet 31 are integrally formed. The integrated structural design of the terminal 33 and the connecting sheet 31 allows the terminal 33 and the connecting sheet 31, which are integrally formed, to be integrally installed onto the mounting surface 210 of the main body 21 along the first direction X when assembling the battery cell 1, thereby enhancing the assembly efficiency and convenience of the battery cell 1.

In some embodiments of the present application, referring to FIGS. 1-4, the battery cell 1 further includes a top cover plate 40 and a baffle plate 41. The top cover plate 40 covers the opening 11 of the housing 10. The top cover plate 40 is provided with a first through-hole 401 and a second through-hole 402. The first through-hole 401 and the second through-hole 402 are arranged spaced apart along the third direction Z. The terminal 33 is inserted into the first through-hole 401, and the second through-hole 402 is arranged opposite to the second end 222 of the tab 22 along the first direction X. The baffle plate 41 is provided within the second through-hole 402. By providing the second through-hole 402, the connecting sheet 31 is first installed onto the mounting surface 210 of the main body 21 when assembling the battery cell 1. After installing the top cover plate 40, the connecting sheet 31 is welded to the tab 22 through the second through-hole 402, thereby improving the assembly efficiency of the battery cell 1. Upon welding, the second through-hole 402 can be sealed by the baffle plate 41, ensuring the sealing of the housing 10. The baffle plate 41 is arranged opposite to the first segment 311 of the connecting sheet 31 along the first direction X.

In some embodiments of the present application, referring to FIGS. 1-4, the battery cell 1 further includes an insulating sheet 411, which is provided between the baffle plate 41 and the first segment 311 to electrically insulate the connecting sheet 31 from the baffle plate 41, preventing short-circuit.

Additionally, referring to FIGS. 1-4, the battery cell 1 further includes an explosion-proof valve 42, a liquid injection hole 43, and a lower plastic member 44. The explosion-proof valve 42 and the liquid injection hole 43 are arranged spaced apart on the top cover plate 40 along the third direction Z. The lower plastic member 44 is provided on a surface of the top cover plate 40 facing the main body 21 in the first direction X.

Some embodiments of the present application provide a method for assembling the battery cell 1, including the following steps:
S100: inserting the electrode assembly 20 into the housing 10, where the second end 222 of the tab 22 of the electrode assembly 20 faces the opening 11 of the housing 10 in the first direction X;
S110: welding at least part of the end surface 2221 of the second end 222 of the tab 22 to the connecting sheet 31 to form the welding mark 32, where the welding mark 32 extends along the second direction Y.

In some embodiments of the present application, the step S110 further includes: welding a portion where at least part of the end surface 2221 of the second end 222 of the tab 22 is attached to the connecting sheet 31 by laser penetration welding. A laser penetrates the connecting sheet 31 and extends along the first direction X to the second end 222, fusing the connecting sheet 31 and the second end 222 to form the welding mark 32; and the laser moves along the second direction Y such that the formed welding mark 32 extends along the second direction Y.

In some embodiments of the present application, the step S110 further includes: placing the top cover plate 40 over the opening 11 of the housing 10, welding the connecting sheet 31 to the end surface 2221 of the second end 222 by laser through the second through-hole 402 in the top cover plate 40, and after welding, welding the baffle plate 41 into the second through-hole 402.

In some embodiments of the present application, a battery pack is provided, which includes the battery cell 1.

In some embodiments of the present application, a battery pack is provided, which includes the battery cell 1 assembled according to the method for assembling the battery cell as described above.

In some embodiments, Examples 1-6 are further provided, where the battery cells of respective examples are the same as that in FIG. 1 of the present application, which satisfy: 0.5 ≤ L₁/L₂ < 1. Meanwhile, Comparative Examples 1-2 are provided, which do not satisfy: 0.5 ≤ L₁/L₂ < 1.

Performance tests are performed on the battery cells of respective examples and comparative examples, particularly focusing on actual capacity/rated capacity and welding yield.

The testing process is as follows. For the measurement of the actual capacity/rated capacity, the actual capacity is determined by performing discharging at a rated current until a cut-off voltage is reached, and determining an amount of discharge as the actual capacity, where the rated current and the cut-off voltage are set for testing according to the values specified during battery production or factory settings; and the rated capacity for measuring is based on the capacity specified during battery production or factory settings.

Regarding the measurement of the welding yield: randomly selecting some battery samples; observing the welding condition between the tab and the connecting sheet; determining a battery as an unqualified product when a welding mark or scorch mark is present on the aluminum housing, while determining a battery cell as a qualified product when a welding mark is only present on the tab and the connecting sheet; and calculating the welding yield by subtracting the number of the unqualified products from the total number of the samples and then dividing by the total number of the samples.

Regarding the measurement of pulling force: fixing the cell with a clamp, pulling the connecting sheet using a dynamometer, and obtaining a pulling force value displayed on the dynamometer when the connecting sheet and the tab are separated.

Regarding the measurement of internal resistance of the cell: the internal resistance of the cell is measured using HI-POT equipment.

Test results are shown in Table 1 and Table 2.

**Table 1**

| | L₁ (mm) | L₂ (mm) | L₁/L₂ | Actual capacity/Rated capacity | Welding yield |
|---|---|---|---|---|---|
| Example 1 | 12.5 | 25 | 0.50 | 0.95 | 97% |
| Example 2 | 18 | 30 | 0.60 | 0.96 | 97% |
| Example 3 | 31 | 43 | 0.72 | 0.98 | 97% |
| Example 4 | 48 | 56 | 0.86 | 0.99 | 97% |
| Example 5 | 79.2 | 80 | 0.99 | 1.00 | 97% |
| Example 6 | 80.75 | 85 | 0.95 | 0.98 | 97% |
| Example 7 | 72 | 72 | 1.00 | 1.00 | 20% |
| Example 8 | 31 | 67 | 0.46 | 0.70 | 97% |

**Table 2**

| | H₁(mm) | H₂(mm) | 0.5mm+H₁≤H₂≤1.5mm+H₁ | Pulling force (N) | Internal resistance of cell (MΩ) |
|---|---|---|---|---|---|
| Example 1 | 0.5 | 1 | Satisfied | 39 | 177 |
| Example 2 | 0.61 | 1.5 | Satisfied | 40 | 181 |
| Example 3 | 0.73 | 1.67 | Satisfied | 40.5 | 186 |
| Example 4 | 0.81 | 1.81 | Satisfied | 41.5 | 188 |
| Example 5 | 0.9 | 2 | Satisfied | 43 | 192 |
| Example 6 | 1.5 | 3 | Satisfied | 48 | 195 |
| Example 7 | 0.4 | 0.6 | Not satisfied | 10 | 175 |
| Example 8 | 2 | 4 | Not satisfied | 56 | 250 |

It can be seen from the examples shown in Table 1 above that when the battery cell satisfies: 0.5 ≤ L₁/L₂ < 1, the ratio of the actual capacity to the rated capacity of the battery cell is above 0.95, indicating that the battery cell is capable of effectively transmitting the energy from the electrode sheet through the tab to the outside. Additionally, the welding yield between the tab and the connecting sheet is above 97%, showing high welding yield. When the L₁/L₂ is less than 0.5, the actual capacity/rated capacity of the battery cell falls below 0.7, and large part of the energy cannot be transmitted through the tab to the outside, resulting in a severe reduction in the actual capacity of the battery cell. When the L₁/L₂ ≥ 1, the tab and the connecting sheet are prone to welding to the housing during the welding process, resulting in a severe reduction in the welding yield, and the welding yield is below 20%.

It can be seen from the examples shown in Table 2 above that when the battery cell satisfies: 0.5 mm + H₁ ≤ H₂ ≤ 1.5 mm + H₁, the pulling force between the connecting sheet and the tab after welding is higher (above 39 N), ensuring a firm connection between the connecting sheet and the tab. Additionally, the internal resistance of the cell is lower (below 195 MΩ).

In the case that the battery cell satisfies: 0.5 mm + H₁ ≤ H₂ ≤ 1.5 mm + H₁, when the H₂ is too large, it will cause an increase in the internal resistance of the battery cell; when the H₂ is too small, the pulling force between the connecting sheet and the tab is insufficient, the connecting sheet is prone to peeling from the tab, resulting in failure of the battery cell.

The above provides a detailed introduction to the battery cell, the method for assembling the battery cell, and the battery pack provided in the embodiments of the present application. The principles and implementations of the present application are illustrated using specific examples herein. The descriptions of the above embodiments are intended to aid in understanding the method and core concepts of the present application. At the same time, for those skilled in the art, changes may be made in specific implementations and application scopes based on the concepts of the present application. In summary, the content of this specification should not be construed as limiting the present application.

## Claims

1. A battery cell, comprising: a housing having an accommodating cavity; wherein the battery cell further comprises:
an electrode assembly, provided in the accommodating cavity, and comprising a main body and a tab connected to the main body; the main body has a first direction, and the tab extends only along the first direction; the tab has a second end, and the second end is located on a side of the tab away from the main body;
a connecting assembly, provided on a side of the second end away from the main body, and fixed to an end surface of the second end by welding; a welding mark is formed at a welding position between the connecting assembly and the end surface of the second end; at least part of the welding mark penetrates the connecting assembly and partially extends along the first direction into the second end of the tab; the tab comprises a plurality of tab sheets stacked along a second direction, and the welding mark is arranged along the second direction; wherein the first direction intersects with the second direction;
the housing is provided with an opening, and a side of the main body facing the opening has a mounting surface perpendicular to the first direction; in the first direction, a distance between the end surface of the second end of the tab and the mounting surface is L, wherein 0.1 mm ≤ L ≤ 10 mm.

2. The battery cell according to claim 1, wherein 0.5 mm ≤ L ≤ 5 mm.

3. The battery cell according to claim 1, wherein the housing is provided with the opening, and the side of the main body facing the opening has the mounting surface perpendicular to the first direction; an orthographic projection of the welding mark onto the mounting surface has two maximum contour points opposite to each other in the second direction, and a line segment extending along the second direction is provided between the two maximum contour points; a length L₁ (mm) of the line segment is a maximum dimension of the orthographic projection of the welding mark onto the mounting surface in the second direction;
the housing comprises two side walls opposite to each other along the second direction, and a distance between the two side walls in the second direction is L₂ (mm), satisfying: 0.5 ≤ L₁/L₂ < 1.

4. The battery cell according to claim 3, wherein 0.6 ≤ L₁/L₂ ≤ 0.95.

5. The battery cell according to claim 1, wherein the connecting assembly comprises a connecting sheet and a terminal;
the connecting sheet comprises a first segment and a second segment connected along a third direction, and the first segment is fixed to the end surface of the second end by welding; the terminal is provided on a surface of the second segment away from the main body in the first direction, and the terminal is electrically connected to the tab through the connecting sheet;
the first direction, the second direction, and the third direction are perpendicular to each other.

6. The battery cell according to claim 5, wherein the welding mark is formed at a welding position between the connecting sheet and the end surface of the second end, and at least part of the welding mark penetrates the connecting sheet along the first direction, and partially extends into the second end of the tab; in the first direction, the connecting sheet has a thickness of H₁ mm, and the welding mark has a depth of H₂ mm, satisfying: 0.5 mm+H₁≤H₂≤1.5 mm+H₁.

7. The battery cell according to claim 5, wherein the housing has the opening connecting the accommodating cavity to the outside; the battery cell further comprises a top cover plate and a baffle plate, and the top cover plate covers the opening of the housing; the top cover plate is provided with a first through-hole and a second through-hole arranged spaced apart along the third direction, and the terminal is inserted into the first through-hole;
the second through-hole is provided opposite to the second end of the tab along the first direction, and the baffle plate is provided within the second through-hole, wherein the first direction, the second direction, and the third direction are perpendicular to each other.

8. The battery cell according to claim 7, wherein the battery cell further comprises an insulating sheet provided between the baffle plate and the first segment to electrically insulate the connecting sheet from the baffle plate.

9. The battery cell according to claim 1, wherein a shape of the welding mark comprises at least one of a circle, an arc, an oblique line, and a polyline.

10. The battery cell according to claim 9, wherein the welding mark has a shape of an oblique line, each connecting sheet is provided with a plurality of welding mark units, and the plurality of welding mark units form the welding mark; and an angle is formed between a length direction of each welding mark unit and the second direction, and the angle is within a range of 10°-80°.

11. The battery cell according to claim 3, wherein a preset angle α is formed between the line segment and the third direction, and the preset angle α satisfies: 0° < α ≤ 90°.

12. The battery cell according to claim 11, wherein the preset angle α satisfies: 85° ≤ α ≤90°.

13. A method for assembling the battery cell according to any one of claims 1-12, comprising the following steps:
inserting the electrode assembly into the housing, wherein the second end of the tab of the electrode assembly in the first direction faces the opening of the housing;
welding at least part of the end surface of the second end of the tab with the connecting sheet to form the welding mark, wherein the welding mark extends along the second direction.

14. A battery pack, wherein the battery pack comprises the battery cell according to any one of claims 1-12.

15. A battery pack, wherein the battery pack comprises the battery cell assembled by the method for assembling the battery cell according to claim 13.
